# EUROPEAN PATENT APPLICATION

(11) **EP 0 742 633 A2**
(43) Date of publication of application: **13.11.1996**
(21) Application number: 96106931.7
(22) Date of filing: 02.05.1996
(51) Int. Cl.: H02K 7/12, H02K 7/102

(54) **Self-braking electric motor**

(30) Priority: 10.05.1995 IT PD950093
(71) Applicant: LAFERT S.r.l., I-30027 San Dona' Di Piave Venezia (IT)
(72) Inventor: De Bei, Francesco, 42100 Reggio Emilia (IT)
(74) Representative: Modiano, Guido, Dr.-Ing.

(57) **Abstract**

The self-braking electric motor (10) has a stator (12) and an axial shaft (14) that are supported inside a frame (11). The shaft (14) is supported by bearings (13), and a rotor (15) is fixed to the shaft (14). A brake (16) is also included at the end of the rotor (15) and is inserted coaxially in the shaft (14). The brake (16) has one part (17) that is movably coupled, by means of a splined coupling, to the shaft (14), and by a fixed part (19) that is supported by the frame (11). The electric motor (10) furthermore has an annular deflector (20) for the magnetic flux of the rotor (15) that is coupled to said shaft (14) by means of a splined coupling, so that it is axially slideable, between the rotor (15) and the brake (16). The deflector (20) is adapted to act as a magnet, when the motor (10) is activated, attracting an annular element (21) that is movably coupled to the shaft (14), is fixed to the movable part (17) of the brake (16), and acts as a complementary magnet. The electric motor (10) furthermore comprises a spring (23) interposed at least between the deflector (20) and the annular element (21), and means (33-35) for restraining the movement of the deflector (20) along the shaft (14) towards the annular element (21).

## Description

The present invention relates to a self-braking electric motor.

Electric motors internally provided with a brake that is activated when the supply current is no longer available are known and have long been appreciated.

In particular, said electric motors, which are known as self-braking motors, comprise a stator and an axial shaft that are supported inside a frame; the shaft is supported by means of bearings and a rotor is fixed thereto.

At the tip of the rotor there is provided a friction brake that is inserted coaxially in the shaft; said brake is constituted by a movable part, which is rigidly coupled by a splined coupling to said shaft, and by a fixed part, which is supported by the frame.

Said electric motors have an electromagnet that is fixed coaxially to the shaft in an intermediate position between the rotor and the movable part of the brake.

When the self-braking electric motor is supplied with power, the electromagnet is simultaneously powered and attracts towards itself a corresponding complementary magnet that is fixed to the movable part of the brake.

Therefore, when the electric motor is supplied with power, the movable part of the brake is separated with respect to the fixed part, allowing the shaft to turn freely.

If, for various reasons, the power supply ceases, the supply to the electromagnet also ceases at the same time; since said electromagnet no longer retains the complementary magnet and accordingly the movable part of the brake, it allows said movable part, pushed by appropriate complementary pusher means, to rest against the fixed part, thus producing the braking action.

Although they have been in use for a long time, self-braking electric motors executed according to the above-described construction method, are not free from drawbacks, the main one being their considerable constructive complexity.

Such constructive complexity leads to a significant increase in the cost of self-braking electric motors, which makes them scarcely competitive with respect to electric motors that are braked in other manners.

A principal aim of the present invention is to provide a self-braking electric motor that is constructively simple and does not have electric circuits except for those strictly related to the motor.

According to this aim, an object of the present invention is to provide a self-braking electric motor having competitive costs with respect to those of differently braked motors.

Another object of the present invention is to provide a self-braking electric motor in which the brake is actuated automatically when the supply of power to the stator ceases.

Another object of the present invention is to provide a self-braking electric motor in which the retention of the movable part in a spaced position with respect to the fixed part of the brake does not entail a further expenditure of electric power.

Another object of the present invention is to provide an electric motor that can be manufactured with conventional technologies, possibly by partially-automated mass production.

Another object of the present invention is to provide a self-braking electric motor which, in operation, achieves safety standards that are at least equal to the standards met by conventional motors.

With this aim, these and other objects in view, there is provided a self-braking electric motor as defined in the appended claims.

Further characteristics and advantages of the present invention will become apparent from the following detailed description of two embodiments thereof, illustrated only by way of non-limitative example in the accompanying drawings, wherein:
figure 1 is a partially sectional side view of a self-braking electric motor, according to the invention, in a first embodiment thereof;
figure 2 is another partially sectional side view of the motor of figure 1;
figure 3 is a perpective view of a detail of the motor of figure 1;
figure 4 is a partially sectional side view of the detail of figure 3;
figure 5 is a partially sectional side view of a self-braking electric motor, according to the invention, in a second embodiment thereof.

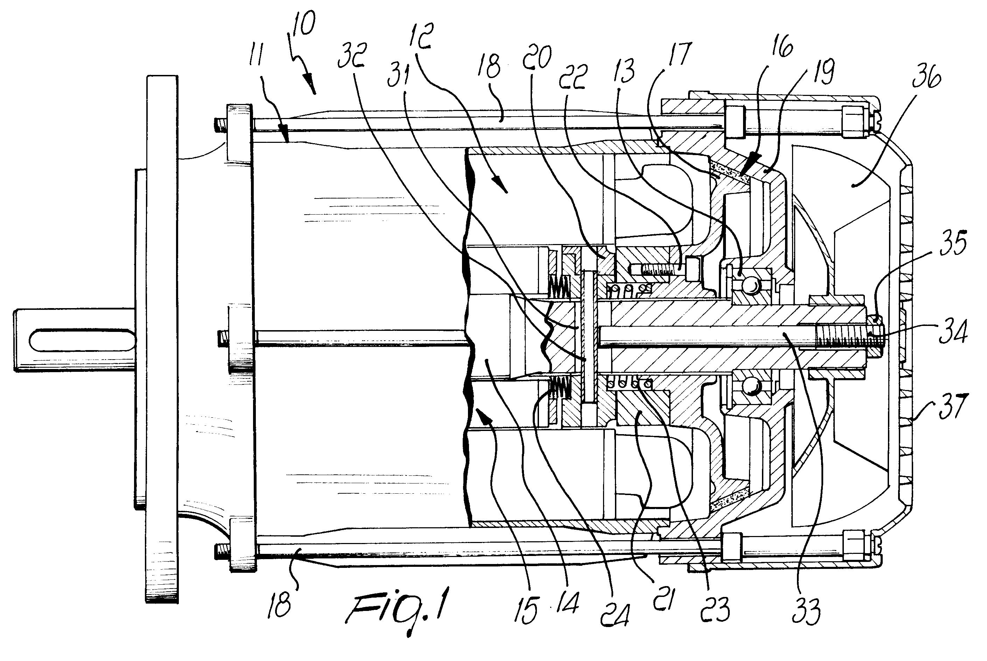

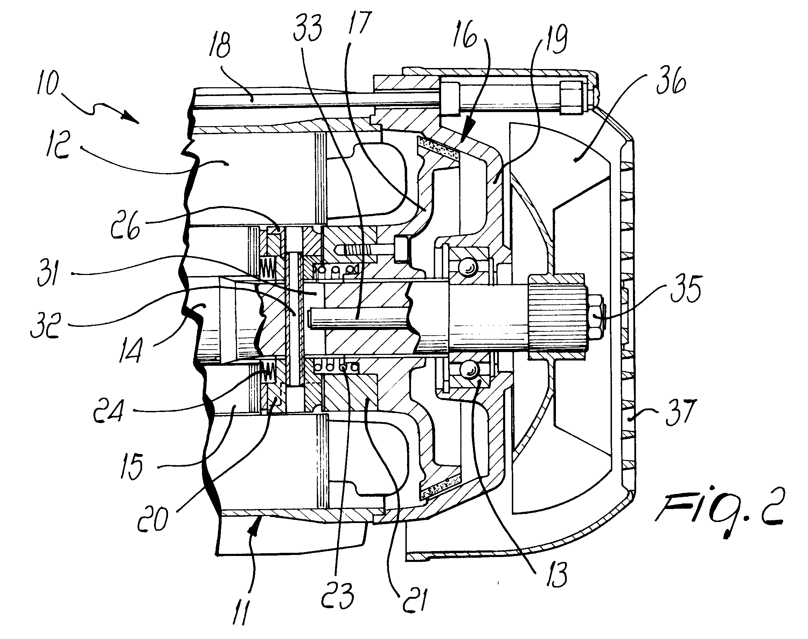

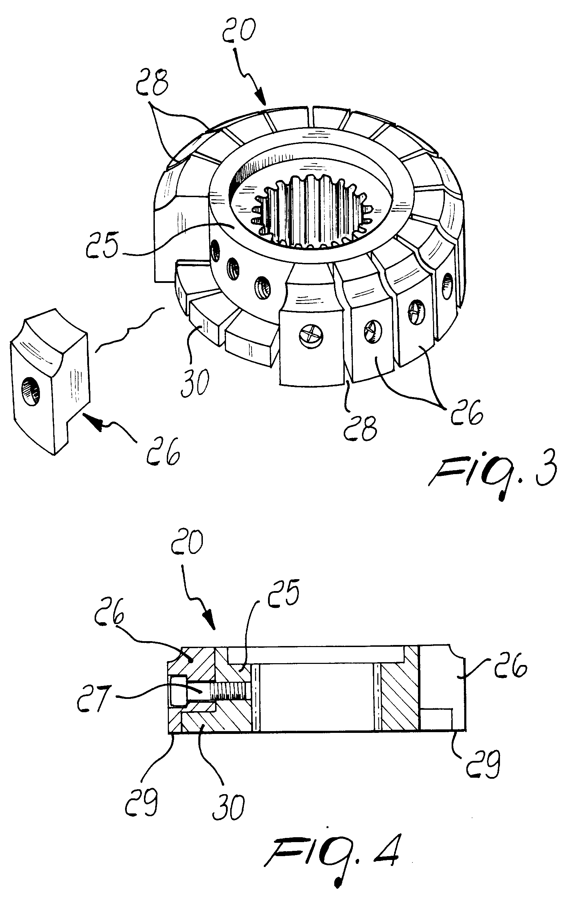

With particular reference to figures 1 to 4, a self-braking electric motor, according to the invention, is generally designated by the reference numeral 10, in a first embodiment.

The electric motor 10 comprises a stator 12 and an axial shaft 14 that are supported inside a frame 11; said shaft is supported by means of bearings 13, and a rotor 15 is fixed to said shaft.

A friction brake, generally designated by the reference numeral 16, is coaxially inserted at the end of the rotor 15 in the shaft 14.

The friction brake 16, in this case, is constituted by a movable part, which is coupled by means of a splined coupling to the shaft 14 and is constituted by a disk 17 that is conical along its circumference, and by a fixed part, which is rigidly coupled to the frame 11 by means of traction elements 18 and is constituted by a substantially disk-shaped lid 19 the internal surface whereof, upon assembly, is shaped substantially complementarily to the conical circumferential part of the disk 17.

The lid 19 is furthermore coupled to the shaft 14 by means of the bearings 13.

The electric motor 10 comprises a deflector 20 for the magnetic flux of the rotor. The deflector 20 is slidingly coupled to the shaft 14 by means of a splined coupling, between the rotor 15 and the disk 17.

When the electric motor 10 is activated, the annular deflector 20 acts as a magnet, attracting towards it an annular element 21 that is fixed to the disk 17, in this case, by means of four threaded elements or bolts 22 which may be arranged substantially in a cross-shaped configuration.

A helical spring 23 is interposed between the deflector 20 and the annular element 21, and a Belleville spring washer 24 is interposed between the deflector 20 and the rotor 15.

The deflector 20 is constituted by an annular body 25 connected, by a splined coupling, to the shaft 14.

A plurality of deflector blocks 26 is fixed along the circumference of the annular body 25; said blocks are shaped so as to deflect the magnetic flux of the stator from substantially radial directions to substantially axial directions.

Each one of the deflector blocks 26 is fixed to the annular body 25 by means of a corresponding threaded element 27.

Furthermore, between adjacent deflector blocks 26 there is an interspace 28 that is filled with a filler material, such as a resin of the type used for brushless motors.

Each one of the deflector blocks 26 comprises a shaped block defining a transverse cross-section that is substantially shaped like an annular segment.

Upon assembly, each one of the deflector blocks 26 is tapered on the side directed towards the annular element 21, whereas on the opposite side it has a shaped raised portion 29 that rests on a flange 30 formed in said annular body 25.

The shaft 14 has a diametrical through hole 31 whereat the annular body 25 is placed upon assembly.

A pin 32 is inserted in the through hole 31 during assembly and is fixed diametrically to the annular body 25 at its ends.

The electric motor 10 comprises means for restraining the movement of the deflector 20 along the shaft 14 towards the annular element 21; said means are constituted by a rod-like spacer 33 that is inserted axially and slidingly inside said shaft 14.

The spacer 33 has an end resting on the pin 32; by means of said end, it therefore restrains the movement of the deflector 20, whereas the other end is actuated by adjustment means constituted, in this case, by a threaded pin 34 that is axially coupled by means of its thread to the shaft 14.

The end of the threaded pin 34 rests on the corresponding end of the spacer 33, and the head 35 of the threaded pin 34 is accessibile for allowing an operator to adjust the position of the deflector.

In order to cool the wires through which electric current flows, the electric motor 10 comprises a fan 36 that is keyed coaxially to the shaft 14 and a fan housing 37 that is fixed to the frame 11 by means of the traction elements 18.

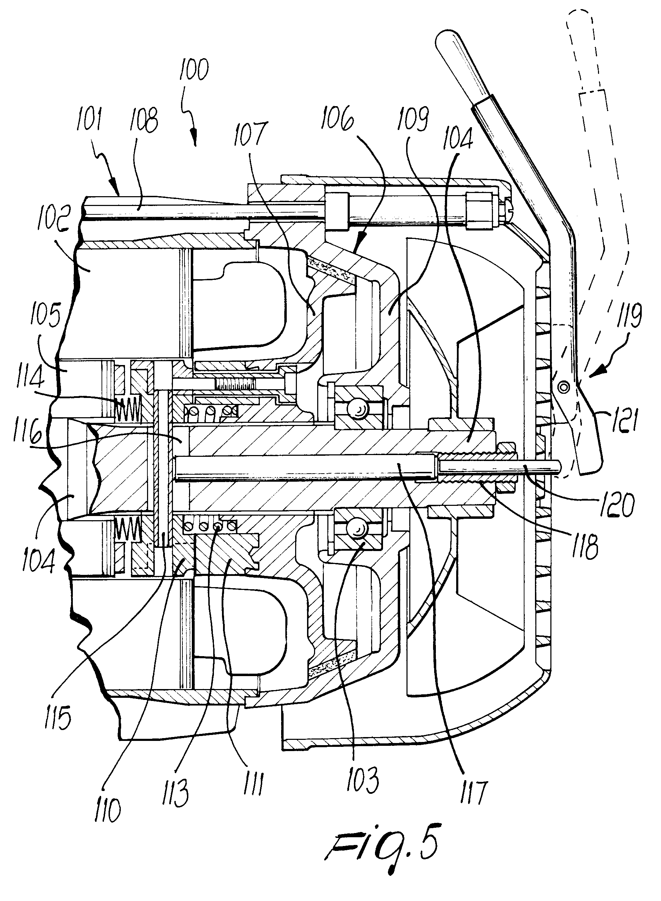

With particular reference to figure 5, a self-braking electric motor, according to the invention, is generally designated by the reference numeral 100 in a second embodiment.

The electric motor 100 comprises, supported inside a frame 101, a stator 102 and a coaxial shaft 104; the shaft is supported by means of the bearings 103, and a rotor 105 is fixed thereto.

A friction brake, generally designated by the reference numeral 106, is comprised within the electric motor 100 at the tip of the rotor 105 and is inserted coaxially in the shaft 104.

The friction brake 106 is constituted by a movable part, which is rigidly coupled by means of a splined coupling to the shaft 104 and is constituted, in this case, by a disk 107 that is conical along its circumference, and by a fixed part, which is fixed to the frame by means of traction elements 108 and is constituted, again in this case, by a lid 109 the internal surface whereof, upon assembly, is shaped complementarily to the circumferential conical region of the disk 107.

The lid 109 is coupled to the shaft 104 by means of the interposition of the bearings 103.

The electric motor 100 comprises an annular deflector 110 that is slidingly coupled by means of a splined coupling to the shaft 104 between the rotor 105 and the disk 107; said deflector is adapted to act as a magnet when the electric motor 100 is activated, attracting an annular element 111 that is movably coupled to the shaft 104 and is fixed by means of threaded elements 112 to the disk 107.

A helical spring 113 is interposed in this case between the deflector 110 and the disk 107, whereas a Belleville spring washer 114 is interposed, again in this case, between the deflector 110 and the rotor 105.

As regards the constructive details of the deflector 110, reference is made to what has been described regarding the first embodiment, since there are no substantial differences with respect to the deflector 20.

A pin 115 is fixed diametrically to the deflector 110 and is inserted, upon assembly, in a through hole 116 formed diametrically in the shaft 104.

The electric motor 100 comprises means for restraining the movement of the deflector 110 along the shaft 104 towards the annular element 111.

In particular, the restraining means are constituted, in this case, by an axially slideable rod-like spacer 117 inserted within the shaft 104 and having an end resting on the pin 115, the other end of the spacer 117 being actuated by adjustment means.

In this case, the adjustment means comprise a threaded pin 118, which is axially coupled to the shaft 104 by means of a threaded coupling and having an end resting on the corresponding end of the spacer 117.

The electric motor 100 comprises manual means for releasing the brake, which are generally designated by the reference numeral 119.

The manual means for releasing the brake 119 comprise, in turn, a pin 120 that is slidingly and axially inserted in the threaded pin 118.

The pin 120 can, as an alternative to the threaded pin 118, actuate the spacer 117, since a lever mechanism 121 is provided which is supported outside the electric motor 100 and in turn actuates the pin 120.

The mechanism 121 is furthermore available for manual action on the part of the operator.

In both embodiments, stator activation produces a substantially radial magnetic field.

The deflector 20 or 110 deflects part of said radial magnetic field in a substantially axial direction, attracting towards it the annular element 21 or 111, which thus acts substantially as a complementary magnet.

The annular element 21 or 111, by being fixed to the disk 17 or 107 of the brake, causes the deactivation of said brake, and therefore the rotor 105 or 15 and accordingly the shaft 14 or 104 can rotate freely.

The end of the activation of the stator 12 or 102 causes therefore the separation of the annular element 21 or 111 from the corresponding deflector 20 or 110.

The direct consequence of this separation is the reactivation of the brake.

Adjustment of the movement of the deflector 20 or 110 is assisted, in association, by the helical spring 23 or 113, by the Belleville spring washer 24 or 114, and by the spacer 33 or 117.

In the second embodiment, furthermore, it is possible to actuate the spacer 17 also by means of a lever mechanism 121 that acts on said spacer 117 by means of a pin 120.

The action of the lever mechanism 121 is manual and the mechanism can therefore be activated even when the stator power supply is still present.

It has been observed that the intended aim and objects have been achieved; in particular, the extreme constructive simplicity of the electric motor according to the invention should be noted; said electric motor provides the self-braking action without introducing additional electrical circuits, since it is the magnetic flux generated by the stator that determines the release of the brake.

In view of this constructive simplicity, it should be noted that it is possible to considerably reduce the production costs and that any automation of production is further facilitated and simplified.

It should also be noted that, since the deflector is a substantially passive element, it does not run the risk of short circuits or in any case of electrical damage.

It should also be noted that in order to cause brake release there are no further electrical power supplies and therefore no electrical consumption, except that directly related to the stator.

The present invention is susceptible to numerous modifications and variations, all of which are within the scope of the inventive concept.

All the details may be replaced with other technically equivalent elements.

The materials and the dimensions may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Self-braking electric motor comprising a stator and an axial shaft supported inside a frame, said shaft being supported by means of bearings, a rotor fixed to said shaft, a friction brake included at the end of said rotor and inserted coaxially in said shaft, said brake being constituted by a part movably coupled, by means of a splined coupling, to said shaft, and fixed part supported by said frame, characterized in that it comprises an annular deflector for the magnetic flux of the rotor, said deflector being radially coupled to said shaft and axially slideable threon between said rotor and said brake, said deflector being adapted to act as a magnet, when said motor is activated, attracting an annular element that is movably coupled to said shaft, is fixed to the movable part of said brake, and acts as a complementary magnet; complementary pusher means being provided which are interposed at least between said deflector and said annular element; means being furthermore provided for restraining movement of said deflector along said shaft towards said annular element.

2. Electric motor according to claim 1, characterized in that said deflector is constituted by an annular body having a splined coupling to said shaft and whereon a plurality of deflector blocks is fixed circumferentially, said deflector blocks being shaped so as to deflect the magnetic flux from substantially radial directions to substantially axial directions.

3. Electric motor according to claim 2, characterized in that each one of said blocks is fixed to said annular body by means of a corresponding threaded element.

4. Electric motor according to claim 2, characterized in that an interspace is provided between adjacent deflector blocks and is filled with a filler material.

5. Electric motor according to claim 2, characterized in that each one of the blocks has a transverse cross-section that is substantially shaped like an annular segment.

6. Electric motor according to claim 5, characterized in that each one of said blocks tapers, upon assembly, towards said annular element, whereas on the opposite side it has a shaped raised portion that rests on a flange formed in said annular body.

7. Electric motor according to one or more of the preceding claims, characterized in that said shaft has a diametrical through hole whereat said annular body is placed upon assembly, a pin being located inside said hole and fixed diametrically, at its ends, to said annular body, said restraining means comprising a rod-like spacer that is axially and slidingly inserted within said shaft and has one end resting on said pin and another end actuated by adjustment means.

8. Electric motor according to claim 7, characterized in that said adjustment means comprise a threaded pin axially coupled to said shaft by means of a threaded coupling, the end of said pin resting on a corresponding end of said spacer, said threaded pin having a head that is available for adjustment on the part of the operator.

9. Electric motor according to one or more of the preceding claims, characterized in that said complementary pusher means comprise a helical spring that is interposed between said deflector and said annular element.

10. Electric motor according to one or more of the preceding claims, characterized in that said complementary pusher means comprise a Belleville spring washer that is interposed between said deflector and said rotor.

11. Electric motor according to one or more of the preceding claims, characterized in that said annular element is fixed to said movable part by means of at least four threaded elements.

12. Electric motor according to one or more of the preceding claims, characterized in that it comprises manual brake release means.

13. Electric motor according to claim 12, characterized in that said manual release means comprise a pin slidingly and axially inserted in said threaded pin, for actuating said spacer, a lever mechanism being provided which is supported externally by said electric motor, said mechanism actuating said pin.
